# FASCICULE DE BREVET EUROPEEN

(11) **EP 2 900 486 B1**
(45) Date de publication et mention de la délivrance du brevet: **16.11.2016**
(21) Numéro de dépôt: 13766308.4
(22) Date de dépôt: 24.09.2013
(51) Int. Cl.: B60C 9/20, B60C 9/00

(54) **PNEUMATIQUE POUR VEHICULE LOURD DE TYPE GENIE CIVIL**
REIFENWULST FÜR EIN ZIVILES BAUFAHRZEUG
TYRE FOR HEAVY CIVIL ENGINEERING VEHICLE

(30) Priorité: 26.09.2012 FR 1259026
(43) Date de publication de la demande: 05.08.2015
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: FERLIN, Olivier, F-63040 Clermont-Ferrand Cedex 9 (FR)
(74) Mandataire: Millanvois, Patrick Jacques Jean
(86) Numéro de dépôt international: PCT/EP2013/069784
(87) Numéro de publication internationale: WO 2014/048897

(56) Documents cités:
- EP-A1- 1 864 827

## Description

La présente invention concerne un pneumatique radial, destiné à équiper un véhicule lourd de type génie civil et, plus particulièrement, le sommet d'un tel pneumatique.

Bien que non limitée à ce type d'application, l'invention est plus particulièrement décrite en référence à un pneumatique radial de grande dimension, destiné, par exemple, à être monté sur un dumper, véhicule de transport de matériaux extraits de carrières ou de mines de surface. Le diamètre nominal de la jante d'un tel pneumatique, au sens de la norme European Tyre and Rim Technical Organisation ou ETRTO, est au moins égal à 25 pouces.

Un pneumatique comprend deux bourrelets, assurant la liaison mécanique entre le pneumatique et la jante sur laquelle il est monté, les bourrelets étant réunis respectivement par l'intermédiaire de deux flancs à une bande de roulement, destinée à venir en contact avec le sol par l'intermédiaire d'une surface de roulement.

Un pneumatique ayant une géométrie de révolution par rapport à un axe de rotation, la géométrie du pneumatique est généralement décrite dans un plan méridien contenant l'axe de rotation du pneumatique. Pour un plan méridien donné, les directions radiale, axiale et circonférentielle désignent respectivement les directions perpendiculaire à l'axe de rotation du pneumatique, parallèle à l'axe de rotation du pneumatique et perpendiculaire au plan méridien.

Dans ce qui suit, les expressions «radialement intérieur, respectivement radialement extérieur» signifient «plus proche, respectivement plus éloigné de l'axe de rotation du pneumatique». Par «axialement intérieur, respectivement axialement extérieur», on entend «plus proche, respectivement plus éloigné du plan équatorial du pneumatique», le plan équatorial du pneumatique étant le plan passant par le milieu de la surface de roulement du pneumatique et perpendiculaire à l'axe de rotation du pneumatique.

Un pneumatique radial comprend une armature de renforcement, constituée d'une armature de sommet, radialement intérieure à la bande de roulement, et d'une armature de carcasse, radialement intérieure à l'armature de sommet.

L'armature de carcasse d'un pneumatique radial pour véhicule lourd de type génie civil comprend habituellement au moins une couche de carcasse constituée de renforts généralement métalliques enrobés d'un matériau polymérique appelé mélange d'enrobage. La couche de carcasse comprend une partie principale, reliant les deux bourrelets entre eux et s'enroulant, dans chaque bourrelet, de l'intérieur vers l'extérieur du pneumatique autour d'un élément de renforcement circonférentiel généralement métallique appelé tringle, pour former un retournement. Les renforts métalliques d'une couche de carcasse sont sensiblement parallèles entre eux et font, avec la direction circonférentielle, un angle compris entre 85° et 95°.

L'armature de sommet d'un pneumatique radial pour véhicule lourd de type génie civil comprend une superposition de couches de sommet disposées circonférentiellement, radialement à l'extérieur de l'armature de carcasse. Chaque couche de sommet est constituée de renforts généralement métalliques, parallèles entre eux et enrobés d'un matériau polymérique ou mélange d'enrobage.

Parmi les couches de sommet, on distingue usuellement les couches de protection, constitutives de l'armature de protection et radialement les plus à l'extérieur, et les couches de travail, constitutives de l'armature de travail et radialement comprises entre l'armature de protection et l'armature de carcasse.

L'armature de protection, constituée d'au moins une couche de protection, protège essentiellement les couches de travail des agressions mécaniques ou physico-chimiques, susceptibles de se propager à travers la bande de roulement radialement vers l'intérieur du pneumatique.

L'armature de protection comprend souvent deux couches de protection, radialement superposées, formées de renforts métalliques élastiques, parallèles entre eux dans chaque couche et croisés d'une couche à la suivante, en faisant avec la direction circonférentielle des angles dont la valeur absolue est généralement comprise entre 10° et 35°, et de préférence entre 15° et 30°.

L'armature de travail, constituée d'au moins deux couches de travail, a pour fonction de ceinturer le pneumatique et de donner de la rigidité et de la tenue de route au pneumatique. Elle reprend à la fois des sollicitations mécaniques de gonflage, générés par la pression de gonflage du pneumatique et transmis par l'armature de carcasse, et des sollicitations mécaniques de roulage, générés par le roulage du pneumatique sur un sol et transmis par la bande roulement. Elle doit en outre résister à l'oxydation et aux chocs et perforations, grâce à sa conception intrinsèque et à celle de l'armature de protection.

L'armature de travail comprend usuellement deux couches de travail, radialement superposées, formées de renforts métalliques non élastiques, parallèles entre eux dans chaque couche et croisés d'une couche à la suivante, en faisant avec la direction circonférentielle des angles dont la valeur absolue est généralement au plus égale à 60°, et de préférence comprise entre 15° et 40°.

Un renfort métallique est caractérisé mécaniquement par une courbe représentant la force de traction (en N), appliquée au renfort métallique, en fonction de l'allongement relatif (en %) du renfort métallique, dite courbe force-allongement. De cette courbe force-allongement sont déduites des caractéristiques mécaniques en traction, telles que l'allongement structural Aₛ (en %), l'allongement total à la rupture Aₜ (en %), la force à la rupture Fₘ (charge maximale en N) et la résistance à la rupture Rₘ (en MPa), ces caractéristiques étant mesurées selon la norme ISO 6892 de 1984.

L'allongement total à la rupture Aₜ du renfort métallique est, par définition, la somme de ses allongements structural, élastique et plastique (Aₜ = Aₛ + Aₑ + Aₚ). L'allongement structural Aₛ résulte du positionnement relatif des fils métalliques constitutifs du renfort métallique sous un faible effort de traction. L'allongement élastique Aₑ résulte de l'élasticité même du métal des fils métalliques, constituant le renfort métallique, pris individuellement (loi de Hooke). L'allongement plastique Ap résulte de la plasticité (déformation irréversible au-delà de la limite d'élasticité) du métal de ces fils métalliques pris individuellement. Ces différents allongements ainsi que leur signification respective, bien connus de l'homme du métier, sont décrits, par exemple, dans les documents US5843583, WO2005/014925 et WO2007/090603.

On définit également, en tout point de la courbe force-allongement, un module en extension (en GPa) qui représente la pente de la droite tangente à la courbe force-allongement en ce point. En particulier, on appelle module élastique en extension ou module d'Young, le module en extension de la partie linéaire élastique de la courbe force-allongement.

Parmi les renforts métalliques, on distingue usuellement les renforts métalliques élastiques, tels que ceux utilisés dans les couches de protection, et les renforts métalliques non élastiques, tels que ceux utilisés dans les couches de travail.

Un renfort métallique élastique est caractérisé par un allongement structural Aₛ au moins égal à 1% et un allongement total à rupture Aₜ au moins égal à 4%. En outre, un renfort métallique élastique a un module élastique en extension au plus égal à 150 GPa, et compris usuellement entre 40 GPa et 150 GPa.

Un renfort métallique non élastique est caractérisé par un allongement relatif, sous une force de traction égale 10% de la force à rupture Fₘ, au plus égal à 0.2%. Par ailleurs, un renfort métallique non élastique a un module élastique en extension compris usuellement entre 150 GPa et 200 GPa.

Un renfort métallique élastique ou câble élastique est le plus souvent un câble multi torons, c'est-à-dire formés d'un assemblage de plusieurs torons, et dont la structure est, par exemple, du type K*(L+M) dans le cas fréquent où les torons sont des torons à deux couches. K est le nombre de torons à deux couches, L est le nombre de fils métalliques constituant la couche interne d'un toron et M est le nombre de fils métalliques constituant la couche externe d'un toron. Un toron à deux couches est usuellement obtenu par enroulement en hélice de M fils constituant une couche externe d'un toron autour de L fils constituant une couche interne du toron.

Pour un câble élastique de type multi torons, l'allongement structural Aₛ résulte de la construction et de l'aération même du câble multi torons et/ou de ses torons élémentaires ainsi que de leur élasticité propre, le cas échéant d'une préformation imposée à un ou plusieurs de ces torons et/ou fils constitutifs. L'aération du câble résulte, d'une part, de l'écartement des fils par rapport à la direction axiale (direction perpendiculaire à la direction de l'axe du toron) et d'autre part, l'écartement des torons par rapport à la direction axiale (direction perpendiculaire à la direction de l'axe du câble).

Pour diminuer les sollicitations mécaniques de gonflage transmises à l'armature de travail, il est connu des documents FR 2 419 181 et FR 2 419 182 de disposer radialement entre l'armature de travail et l'armature de carcasse, une armature additionnelle, appelée bloc limiteur, dont la fonction est de reprendre en partie les sollicitations mécaniques de gonflage.

Le document FR 2 419 181 décrit et revendique une armature de sommet comprenant une armature de travail, constituée d'au moins deux couches de travail dont les renforts métalliques forment avec la direction circonférentielle des angles au moins égaux à + ou -30°, et une armature additionnelle ou bloc limiteur, comprenant au moins deux couches additionnelles dont les renforts métalliques sont très peu extensibles, c'est-à-dire non élastiques, et forment avec la direction circonférentielle des angles opposés d'une couche à l'autre, au plus égaux au quart de l'angle le plus faible des couches de travail. Ce bloc limiteur est centré sur le plan équatorial et a une largeur au plus égale à la zone de parallélisme entre l'armature de sommet et l'armature de carcasse.

Le document FR 2 419 182 décrit et revendique une armature de sommet comprenant une armature de travail, constituée d'au moins deux couches de travail dont les renforts métalliques forment avec la direction circonférentielle des angles au moins égaux à + ou -30°, et une armature additionnelle ou bloc limiteur, comprenant au moins deux couches additionnelles dont les renforts métalliques sont très peu extensibles, c'est-à-dire non élastiques, et forment avec la direction circonférentielle des angles opposés d'une couche à l'autre, au plus égaux à la moitié de l'angle le plus faible des couches de travail et, de préférence compris entre 5° et 10°. Ce bloc limiteur est centré sur le plan équatorial et a une largeur au plus égale à la zone de parallélisme entre l'armature de sommet et l'armature de carcasse.

Toutefois, une armature additionnelle, constituée de deux couches dont les renforts métalliques sont non élastiques et forment avec la direction circonférentielle des angles préférentiellement compris entre 5° et 10° et croisés d'une couche à la suivante, entraîne une rigidification excessive de l'armature de sommet. Cette rigidification de l'armature de sommet induit une augmentation de la sensibilité du pneumatique aux chocs survenant au centre la bande de roulement. En effet, une grande partie de l'énergie de déformation générée par les chocs est alors transmise à l'armature de carcasse dont la durée de vie est alors diminuée.

Le document EP 1 864 827 montre un pneumatique qui présente toutes les caractéristiques du préambule de la revendication 1.

Les inventeurs se sont donnés pour objectif de désensibiliser le sommet d'un pneumatique radial pour véhicule lourd de type génie civil aux chocs survenant essentiellement au centre de la bande de roulement.

Cet objectif a été atteint, selon l'invention, par un pneumatique pour véhicule lourd de type génie civil comprenant :
- une bande de roulement, une armature de sommet radialement intérieure à la bande de roulement et une armature de carcasse radialement intérieure à l'armature de sommet,
- l'armature de sommet comprenant, radialement de l'extérieur vers l'intérieur,
- une armature de protection comprenant au moins une couche de protection, formée de renforts métalliques élastiques, faisant avec la direction circonférentielle un angle au moins égal à 10°,
- une armature de travail comprenant au moins deux couches de travail, formées de renforts métalliques non élastiques, croisés d'une couche de travail à la suivante et
faisant avec la direction circonférentielle un angle au plus égal à 60°,
- une armature additionnelle centrée sur le plan équatorial du pneumatique, comprenant au moins une couche additionnelle, formée de renforts métalliques faisant avec la direction circonférentielle un angle au plus égal à 10°,
- les renforts métalliques de chaque couche additionnelle étant élastiques et ayant un module élastique en extension au plus égal à 150 GPa.

Dans l'état de la technique précédemment cité, la rigidité d'extension de l'armature additionnelle est sensiblement supérieure à la rigidité d'extension de l'armature de travail, dans la portion médiane du sommet, au voisinage du plan équatorial du pneumatique. Par rigidité d'extension d'une armature, on entend la force d'extension à exercer sur une largeur unitaire de l'armature pour obtenir un allongement de 1 mm de ladite armature : elle résulte du module en extension des renforts métalliques et des angles formés par lesdits renforts métalliques avec la direction circonférentielle. A titre d'exemple, et de manière non limitative, dans l'état de la technique, la rigidité d'extension de l'armature additionnelle est environ égale à deux fois la rigidité d'extension de l'armature de travail, dans la portion médiane du sommet.

Compte tenu des rigidités d'extension respectives de l'armature additionnelle et de l'armature de travail, une grande partie des efforts est reprise par l'armature additionnelle. Dans le cas où la rigidité d'extension de l'armature additionnelle est estimée à environ deux fois la rigidité d'extension de l'armature de travail, deux tiers des efforts au gonflage du pneumatique sont repris par l'armature additionnelle alors qu'un tiers des efforts au gonflage du pneumatique sont repris par l'armature de travail.

Lors de l'écrasement du pneumatique, en utilisation, l'armature de travail est susceptible de passer alors en compression, dans sa portion médiane, avec un risque de rupture par flambage des renforts métalliques des couches de travail. De plus, l'armature additionnelle reprenant alors des efforts d'extension élevés, les renforts métalliques des couches additionnelles risquent une rupture en extension. Ce phénomène est d'autant plus marqué que le pneumatique de génie civil roule habituellement sur des sols comprenant de nombreux obstacles, tels que des pierres, et est alors soumis à des chocs répétés entraînant l'apparition d'efforts locaux d'extension et de compression élevés. Les passages respectifs en compression de l'armature de travail et en extension de l'armature additionnelle est dommageable pour l'endurance de l'armature de sommet.

L'armature additionnelle de l'invention permet de rééquilibrer la reprise des efforts entre l'armature de travail et l'armature additionnelle. En effet, dans ce cas, du fait d'un module en extension des renforts métalliques élastiques, constitutifs des couches additionnelles de l'armature additionnelle, limité à 150 GPa, pour des angles avec la direction circonférentielle donnés, la rigidité d'extension de l'armature additionnelle est alors limitée, et devient sensiblement égale à la rigidité d'extension de l'armature de travail. Ceci implique que les deux armatures vont reprendre sensiblement le même niveau d'efforts. A l'écrasement, par rapport à l'état de la technique, les efforts d'extension repris par l'armature additionnelle vont diminuer alors que les efforts de compression repris par l'armature de travail, dans sa portion médiane, vont diminuer voire s'annuler. Il en résulte une diminution significative des risques de rupture par flambage des renforts métalliques des couches de travail et de rupture en extension des renforts métalliques des couches de travail, d'où un gain global en endurance de l'armature de sommet.

Le plus souvent les renforts métalliques élastiques de chaque couche additionnelle ont un module élastique en extension compris entre 40 GPa et 150 GPa.

Avantageusement les renforts métalliques élastiques de chaque couche additionnelle sont des câbles multi torons, formés d'un assemblage de torons constitués de fils unitaires. Ce type de renforts présente l'avantage d'être fabriqués selon des procédés connus et maîtrisés.

Selon un mode de réalisation préféré, les renforts métalliques élastiques de chaque couche additionnelle sont des câbles multi torons, formés d'un assemblage de torons à deux couches de fils concentriques, et de structure K*(L+M), où K est le nombre de torons, L est le nombre de fils de la couche interne d'un toron et M le nombre de fils de la couche externe d'un toron. Ce type de renforts est caractérisé par une bonne aptitude à la pénétration d'un mélange d'enrobage, ce qui garantit une bonne tenue à la corrosion et donc une amélioration de l'endurance de l'armature de sommet.

Selon une première variante du mode de réalisation préféré, les renforts métalliques élastiques de chaque couche additionnelle sont des câbles de formule E 3*(1+6).28, formés de 3 torons, chaque toron étant formé d'un fil interne et d'une couche externe de 6 fils, chaque fil ayant un diamètre de 0,28 mm.

Selon une deuxième variante du mode de réalisation préféré, les renforts métalliques élastiques de chaque couche additionnelle sont des câbles de formule E 4*(4+9).26, formés de 4 torons, chaque toron étant formé d'une couche interne de 4 fils et d'une couche externe de 9 fils, chaque fil ayant un diamètre de 0,26 mm.

Selon une autre variante du mode de réalisation préféré, les renforts métalliques élastiques de chaque couche additionnelle sont des câbles de formule E 4*(1+5).26, formés de 4 torons, chaque toron étant formé d'un fil interne et d'une couche externe de 5 fils, chaque fil ayant un diamètre de 0,26 mm.

Avantageusement la largeur axiale de l'armature additionnelle est au plus égale à 0.4 fois la largeur nominale de section du pneumatique. La largeur axiale de l'armature additionnelle est la largeur axiale de la couche additionnelle la plus large, mesurée entre ses deux extrémités axiales. Toutefois, les couches additionnelles peuvent avoir la même largeur axiale, qui est alors la largeur axiale de l'armature additionnelle. La largeur nominale de section du pneumatique, au sens de la norme de la European Tyre and Rim Technical Organisation (ETRTO), est la largeur du pneumatique monté et gonflé sur sa jante théorique et indiquée dans la dimension du pneumatique.

L'armature additionnelle comprend avantageusement au moins deux couches additionnelles. Compte tenu de la rigidité d'extension visée pour l'armature additionnelle, c'est-à-dire sensiblement du même niveau que celle de la portion médiane de l'armature de travail, et compte tenu du type de câbles métalliques utilisés, du type multi torons de structure K*(L+M), l'armature additionnelle comprend a priori au moins deux couches additionnelles, voire trois couches additionnelles superposées.

Selon un premier mode de réalisation préféré, les renforts métalliques élastiques de chaque couche additionnelle font avec la direction circonférentielle un angle compris entre 5° et 10°. Plus précisément, la valeur absolue de l'angle est comprise entre 5° et 10°. Le signe de l'angle est défini par rapport au repère orthonormé (X, Y, Z), où X est l'axe selon la direction ciconférentielle orienté selon le sens de rotation du pneumatique et Z est l'axe selon la direction radiale orienté vers l'extérieur du pneumatique. Préférentiellement, les renforts métalliques sont croisés d'une couche additionnelle à la suivante en faisant avec la direction circonférentielle des angles égaux en valeur absolue et de signe contraire.

Un angle de valeur absolue comprise entre 5° et 10° garantit l'effet de frettage recherché et la reprise d'efforts de tension circonférentiels attendu. Un angle de valeur absolue sensiblement égal à 8° garantit une efficacité satisfaisante de l'armature additionnelle.

Du point de vue fabrication, des couches additionnelles à angle non nul sont par ailleurs aisément mises en oeuvre par les procédés de fabrication de pneumatiques connus.

Selon un deuxième mode de réalisation préféré, les renforts métalliques élastiques de chaque couche additionnelle font avec la direction circonférentielle un angle nul.

Une armature additionnelle, constituée de couches additionnelles dont les renforts métalliques élastiques font avec la direction circonférentielle un angle nul, c'est-à-dire orientés circonférentiellement, permet de maximiser la contribution de l'armature additionnelle à la reprise des efforts circonférentiels.

En outre l'armature additionnelle est désensibilisée au risque de séparation au niveau des extrémités axiales de ses couches additionnelles constitutives. En effet, lorsque les couches additionnelles ont un angle non nul, il existe un risque de séparation des couches additionnelles du fait de la présence des extrémités des renforts métalliques aux extrémités axiales des couches additionnelles. Pour des couches additionnelles à angle nul, il n'y a plus d'extrémités de renforts métalliques susceptibles de générer une séparation des couches.

En fabrication, une armature additionnelle à angle nul permet de diminuer le nombre de raccordements ou soudures, au sein d'une même couche additionnelle, lors de sa pose selon la direction circonférentielle, d'où un gain en productivité et une diminution du risque d'ouvertures au niveau des soudures.

Une armature additionnelle à angle nul peut être fabriquée selon différentes variantes du procédé de fabrication.

Selon une première variante du procédé de fabrication d'une armature additionnelle à angle nul, chaque couche additionnelle est formée par l'enroulement circonférentiel d'une bande unique constituée de renforts métalliques élastiques, radialement à l'extérieur de l'armature de carcasse. Ce procédé permet de poser l'armature additionnelle en une seule fois, avec une seule soudure finale et garantit ainsi une bonne productivité.

Selon une deuxième variante du procédé de fabrication d'une armature additionnelle à angle nul, chaque couche additionnelle est formée par l'enroulement circonférentiel d'une juxtaposition axiale de bandes constituées de renforts métalliques élastiques, radialement à l'extérieur de l'armature de carcasse. Ce procédé permet d'utiliser des bandes élémentaires de largeur standard, autorisant une flexibilité dans le choix de largeur axiale d'une couche additionnelle donnée, et permet, par exemple, de moduler les largeurs axiales des couches additionnelles au sein d'une même armature additionnelle. L'utilisation de bandes élémentaires permet éventuellement de juxtaposer des composants matériaux différents : types de câbles élastiques, types de mélanges d'enrobage. En d'autres termes, cette variante de fabrication avec juxtaposition de bandes élémentaires permet une flexibilité au niveau des largeurs axiales et des composants matériaux des couches additionnelles.

Enfin, selon une troisième variante du procédé de fabrication d'une armature additionnelle à angle nul, chaque couche additionnelle est formée par l'enroulement circonférentiel d'un renfort métallique élastique unitaire, radialement à l'extérieur de l'armature de carcasse. Ce procédé est à la fois productif et permet une flexibilité au niveau des largeurs axiales et des composants matériaux des couches additionnelles.

Préférentiellement, les renforts métalliques élastiques de chaque couche de protection font avec la direction circonférentielle un angle compris entre 15° et 30°.

Le plus souvent l'armature de protection comprend deux couches de protection, formée de renforts métalliques élastiques croisés d'une couche de protection à la suivante.

Préférentiellement, les renforts métalliques non élastiques de chaque couche de travail font avec la direction circonférentielle un angle compris entre 15° et 40°.

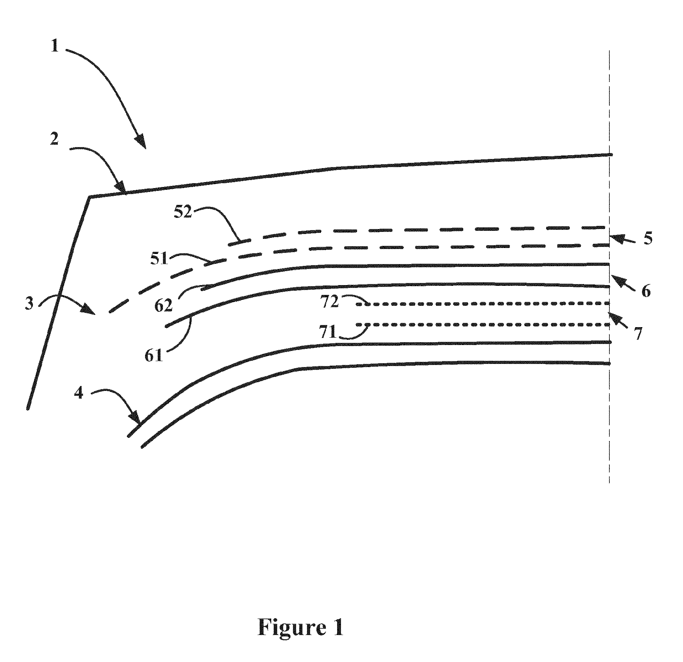

Les caractéristiques de l'invention seront mieux comprises à l'aide de la description de la figure 1 qui présente, de façon simplifiée et non à l'échelle, une demi-coupe, dans un plan méridien, d'un sommet de pneumatique pour véhicule lourd de type génie civil, selon l'invention.

Sur la figure 1, est représentée une demi-coupe méridienne du sommet d'un pneumatique 1 pour véhicule lourd de type génie civil comprenant :
- une bande de roulement 2, une armature de sommet 3 radialement intérieure à la bande de roulement 2 et une armature de carcasse 4 radialement intérieure à l'armature de sommet 3,
- l'armature de sommet 3 comprenant, radialement de l'extérieur vers l'intérieur,
- une armature de protection 5 comprenant au moins une couche de protection (51,52), formée de renforts métalliques élastiques, faisant avec la direction circonférentielle un angle au moins égal à 10°,
- une armature de travail 6 comprenant au moins deux couches de travail (61, 62), formées de renforts métalliques non élastiques, croisés d'une couche de travail à la suivante et faisant avec la direction circonférentielle un angle au plus égal à 60°,
- une armature additionnelle 7 centrée sur le plan équatorial du pneumatique, comprenant au moins une couche additionnelle (71,72), formée de renforts métalliques faisant avec la direction circonférentielle un angle au plus égal à 10°,
- les renforts métalliques de chaque couche additionnelle (71,72) étant élastiques et ayant un module élastique en extension au plus égal à 150 GPa.

L'invention a été plus particulièrement étudiée dans le cas d'un pneumatique de dimension 40.00R57.

L'armature de sommet du pneumatique d'étude comprend, radialement de l'extérieur vers l'intérieur :
- une armature de protection comprenant deux couches de protection, formée de renforts métalliques élastiques de type E 4(1+5).26, dont l'allongement structural Aₛ est égal à 1.8% , l'allongement total à la rupture Aₜ est égal à 6% et le module élastique en extension est égal à 80 GPa, croisés d'une couche de protection à la suivante et faisant avec la direction circonférentielle un angle égal à 10° en valeur absolue,
- une armature de travail comprenant deux couches de travail, formées de renforts métalliques non élastiques de type 189.23 Fr, croisés d'une couche de travail à la suivante et faisant avec la direction circonférentielle un angle égal à 33° en valeur absolue,
- une armature additionnelle comprenant trois couches additionnelles, formée de renforts métalliques élastiques de type E 3(1+6).28, dont l'allongement structural Aₛ est égal à 1.8% , l'allongement total à la rupture Aₜ est égal à 7.5% et le module élastique en extension est égal à 80 GPa, et faisant avec la direction circonférentielle un angle nul.

Des tests d'endurance sur véhicule on montré un gain significatif en endurance du sommet d'un pneumatique selon l'invention.

L'invention n'est pas limitée aux caractéristiques précédemment décrites et peut être étendue à d'autres types de câbles métalliques garantissant la rigidité d'extension de l'armature additionnelle visée, tels que, par exemple et de façon non exhaustive:
- des câbles ondulés,
- des câbles fractionnés.

## Revendications

1. **-** Pneumatique (1) pour véhicule lourd de type génie civil comprenant :
- une bande de roulement (2), une armature de sommet (3) radialement intérieure à la bande de roulement (2) et une armature de carcasse (4) radialement intérieure à l'armature de sommet (3),
- l'armature de sommet (3) comprenant, radialement de l'extérieur vers l'intérieur,
- une armature de protection (5) comprenant au moins une couche de protection (51, 52), formée de renforts métalliques élastiques, faisant avec la direction circonférentielle un angle au moins égal à 10°,
- une armature de travail (6) comprenant au moins deux couches de travail (61, 62), formées de renforts métalliques non élastiques, croisés d'une couche de travail à la suivante et faisant avec la direction circonférentielle un angle au plus égal à 60°,
- une armature additionnelle (7) centrée sur le plan équatorial du pneumatique, comprenant au moins une couche additionnelle (71, 72), formée de renforts métalliques faisant avec la direction circonférentielle un angle au plus égal à 10°,
**caractérisé en ce que** les renforts métalliques de chaque couche additionnelle (71, 72) sont élastiques et ont un module élastique en extension au plus égal à 150 GPa.

2. **-** Pneumatique (1) pour véhicule lourd de type génie civil selon la revendication 1, **caractérisé en ce que** les renforts métalliques élastiques de chaque couche additionnelle (71, 72) ont un module élastique en extension compris entre 40 GPa et 150 GPa.

3. **-** Pneumatique (1) pour véhicule lourd de type génie civil selon l'une des revendications 1 ou 2, **caractérisé en ce que** les renforts métalliques élastiques de chaque couche additionnelle (71, 72) sont des câbles multi torons, formés d'un assemblage de torons constitués de fils unitaires.

4. **-** Pneumatique (1) pour véhicule lourd de type génie civil selon l'une quelconque des revendications 1 à 3, **caractérisé en ce que** les renforts métalliques élastiques de chaque couche additionnelle (71, 72) sont des câbles multi torons, formés d'un assemblage de torons à deux couches de fils concentriques, et de structure K * (L+M), où K est le nombre de torons, L est le nombre de fils de la couche interne d'un toron et M le nombre de fils de la couche externe d'un toron.

5. **-** Pneumatique (1) pour véhicule lourd de type génie civil selon l'une quelconque des revendications 1 à 4, **caractérisé en ce que** les renforts métalliques élastiques de chaque couche additionnelle (71, 72) sont des câbles de formule E 3*(1+6).28, formés de 3 torons, chaque toron étant formé d'un fil interne et d'une couche externe de 6 fils, chaque fil ayant un diamètre de 0,28 mm.

6. **-** Pneumatique (1) pour véhicule lourd de type génie civil selon l'une quelconque des revendications 1 à 4, **caractérisé en ce que** les renforts métalliques élastiques de chaque couche additionnelle (71, 72) sont des câbles de formule E 4*(4+9).26, formés de 4 torons, chaque toron étant formé d'une couche interne de 4 fils et d'une couche externe de 9 fils, chaque fil ayant un diamètre de 0,26 mm.

7. **-** Pneumatique (1) pour véhicule lourd de type génie civil selon l'une quelconque des revendications 1 à 6, **caractérisé en ce que** la largeur axiale de l'armature additionnelle (7) est au plus égale à 0.4 fois la largeur nominale de section du pneumatique.

8. **-** Pneumatique (1) pour véhicule lourd de type génie civil selon l'une quelconque des revendications 1 à 7, **caractérisé en ce que** l'armature additionnelle (7) comprend au moins deux couches additionnelles (71, 72).

9. **-** Pneumatique (1) pour véhicule lourd de type génie civil selon l'une quelconque des revendications 1 à 8, **caractérisé en ce que** les renforts métalliques élastiques de chaque couche additionnelle (71, 72) font avec la direction circonférentielle un angle compris entre 5° et 10°.

10. **-** Pneumatique (1) pour véhicule lourd de type génie civil selon l'une quelconque des revendications 1 à 8, **caractérisé en ce que** les renforts métalliques élastiques de chaque couche additionnelle (71, 72) font avec la direction circonférentielle un angle nul.

11. **-** Pneumatique (1) pour véhicule lourd de type génie civil selon l'une quelconque des revendications 1 à 10, **caractérisé en ce que** les renforts métalliques élastiques de chaque couche de protection (51, 52) font avec la direction circonférentielle un angle compris entre 15° et 30°.

12. **-** Pneumatique (1) pour véhicule lourd de type génie civil selon l'une quelconque des revendications 1 à 11, **caractérisé en ce que** les renforts métalliques non élastiques de chaque couche de travail (61, 62) font avec la direction circonférentielle un angle compris entre 15° et 40°.

## Patentansprüche

1. Reifenwulst (1) für ein ziviles Baufahrzeug, umfassend:
- eine Lauffläche (2), eine Scheitelbewehrung (3) radial innerhalb der Lauffläche (2) und eine Karkassenbewehrung (4) radial innerhalb der Scheitelbewehrung (3),
- wobei die Scheitelbewehrung (3) radial von außen nach innen umfasst:
- eine Schutzbewehrung (5), umfassend mindestens eine Schutzschicht (51, 52), die von elastischen metallischen Verstärkungen gebildet ist, die mit der Umfangsrichtung einen Winkel mindestens gleich 10° bilden,
- eine Arbeitsbewehrung (6), umfassend mindestens zwei Arbeitsschichten (61, 62), die von nicht elastischen metallischen Verstärkungen gebildet sind, die von einer Arbeitsschicht zur folgenden gekreuzt sind und mit der Umfangsrichtung einen Winkel höchstens gleich 60° bilden,
- eine Zusatzbewehrung (7), die auf die Äquatorialebene des Reifenwulstes zentriert ist, umfassend mindestens eine zusätzliche Schicht (71, 72), die von metallischen Verstärkungen gebildet ist, die mit der Umfangsrichtung einen Winkel höchstens gleich 10° bilden,
**dadurch gekennzeichnet, dass** die metallischen Verstärkungen jeder zusätzlichen Schicht (71, 72) elastisch sind und ein elastisches Dehnungsmodul höchstens gleich 150 GPa haben.

2. Reifenwulst (1) für ein ziviles Baufahrzeug nach Anspruch 1, **dadurch gekennzeichnet, dass** die elastischen metallischen Verstärkungen jeder zusätzlichen Schicht (71, 72) ein elastisches Dehnungsmodul zwischen 40 GPa und 150 GPa haben.

3. Reifenwulst (1) für ein ziviles Baufahrzeug nach einem der Ansprüche 1 oder 2, **dadurch gekennzeichnet, dass** die elastischen metallischen Verstärkungen jeder zusätzlichen Schicht (71, 72) mehrsträngige Kabel sind, die von einer Zusammenfügung von aus Einzeldrähten bestehenden Strängen gebildet sind.

4. Reifenwulst (1) für ein ziviles Baufahrzeug nach einem der Ansprüche 1 bis 3, **dadurch gekennzeichnet, dass** die elastischen metallischen Verstärkungen jeder zusätzlichen Schicht (71, 72) mehrsträngige Kabel sind, die von einer Zusammenfügung von Strängen mit zwei Schichten von konzentrischen Drähten und einer Struktur K*(L+M) gebildet sind, wobei K die Anzahl von Strängen, L die Anzahl von Drähten der Innenschicht eines Strangs und M die Anzahl von Drähten der Außenschicht eines Strangs ist.

5. Reifenwulst (1) für ein ziviles Baufahrzeug nach einem der Ansprüche 1 bis 4, **dadurch gekennzeichnet, dass** die elastischen metallischen Verstärkungen jeder zusätzlichen Schicht (71, 72) Kabel der Formel E 3*(1+6).28 sind, die von 3 Strängen gebildet sind, wobei jeder Strang von einem inneren Draht und einer äußeren Schicht von 6 Drähten gebildet ist, wobei jeder Draht einen Durchmesser von 0,28 mm hat.

6. Reifenwulst (1) für ein ziviles Baufahrzeug nach einem der Ansprüche 1 bis 4, **dadurch gekennzeichnet, dass** die elastischen metallischen Verstärkungen jeder zusätzlichen Schicht (71, 72) Kabel der Formel E 4*(4+9).26 sind, die von 4 Strängen gebildet sind, wobei jeder Strang von einer inneren Schicht von 4 Drähten und einer äußeren Schicht von 9 Drähten gebildet ist, wobei jeder Draht einen Durchmesser von 0,26 mm hat.

7. Reifenwulst (1) für ein ziviles Baufahrzeug nach einem der Ansprüche 1 bis 6, **dadurch gekennzeichnet, dass** die axiale Breite der Zusatzbewehrung (7) höchstens gleich 0,4-mal die Nominalquerschnittsbreite des Reifenwulstes ist.

8. Reifenwulst (1) für ein ziviles Baufahrzeug nach einem der Ansprüche 1 bis 7, **dadurch gekennzeichnet, dass** die Zusatzbewehrung (7) mindestens zwei zusätzliche Schichten (71, 72) umfasst.

9. Reifenwulst (1) für ein ziviles Baufahrzeug nach einem der Ansprüche 1 bis 8, **dadurch gekennzeichnet, dass** die elastischen metallischen Verstärkungen jeder zusätzlichen Schicht (71, 72) mit der Umfangsrichtung einen Winkel zwischen 5° und 10° bilden.

10. Reifenwulst (1) für ein ziviles Baufahrzeug nach einem der Ansprüche 1 bis 8, **dadurch gekennzeichnet, dass** die elastischen metallischen Verstärkungen jeder zusätzlichen Schicht (71, 72) mit der Umfangsrichtung einen Winkel gleich Null bilden.

11. Reifenwulst (1) für ein ziviles Baufahrzeug nach einem der Ansprüche 1 bis 10, **dadurch gekennzeichnet, dass** die elastischen metallischen Verstärkungen jeder Schutzschicht (51, 52) mit der Umfangsrichtung einen Winkel zwischen 15° und 30° bilden.

12. Reifenwulst (1) für ein ziviles Baufahrzeug nach einem der Ansprüche 1 bis 11, **dadurch gekennzeichnet, dass** die nicht elastischen metallischen Verstärkungen jeder Arbeitsschicht (61, 62) mit der Umfangsrichtung einen Winkel zwischen 15° und 40° bilden.

## Claims

1. **-** Tyre (1) for a heavy vehicle of the civil engineering type, comprising:
- a tread (2), a crown reinforcement (3) radially on the inside of the tread (2) and a carcass reinforcement (4) radially on the inside of the crown reinforcement (3),
- the crown reinforcement (3) comprising, radially from the outside inwards,
- a protective reinforcement (5) comprising at least one protective layer (51, 52) formed of elastic metallic reinforcers making with the circumferential direction an angle at least equal to 10°,
- a working reinforcement (6) comprising at least two working layers (61, 62) formed of inelastic metallic reinforcers which are crossed from one working layer to the next and make with the circumferential direction an angle of at most 60°,
- an additional reinforcement (7) centred on the equatorial plane of the tyre, comprising at least one additional layer (71, 72) formed of metallic reinforcers making with the circumferential direction an angle of at most 10°,
**characterized in that** the metallic reinforcers of each additional layer (71, 72) are elastic and have a tensile elastic modulus at most equal to 150 GPa.

2. **-** Tyre (1) for a heavy vehicle of the civil engineering type according to Claim 1, **characterized in that** the elastic metallic reinforcers of each additional layer (71, 72) have a tensile elastic modulus of between 40 GPa and 150 GPa.

3. **-** Tyre (1) for a heavy vehicle of the civil engineering type according to either of Claims 1 and 2, **characterized in that** the elastic metallic reinforcers of each additional layer (71, 72) are multistrand ropes formed of an assembly of strands made up of individual threads.

4. **-** Tyre (1) for a heavy vehicle of the civil engineering type according to any one of Claims 1 to 3, **characterized in that** the elastic metallic reinforcers of each additional layer (71, 72) are multistrand ropes formed of an assembly of strands having two concentric layers of threads, and of structure K * (L+M), where K is the number of strands, L is the number of threads in the internal layer of a strand and M is the number of threads in the external layer of a strand.

5. **-** Tyre (1) for a heavy vehicle of the civil engineering type according to any one of Claims 1 to 4, **characterized in that** the elastic metallic reinforcers of each additional layer (71, 72) are cords of formula E 3*(1+6).28, formed of 3 strands, each strand being formed of an internal thread and of an external layer of 6 threads, each thread having a diameter of 0.28 mm.

6. **-** Tyre (1) for a heavy vehicle of the civil engineering type according to any one of Claims 1 to 4, **characterized in that** the elastic metallic reinforcers of each additional layer (71, 72) are cords of formula E 4*(4+9).26, formed of 4 strands, each strand being formed of an internal layer of 4 threads and of an external layer of 9 threads, each thread having a diameter of 0.26 mm.

7. **-** Tyre (1) for a heavy vehicle of the civil engineering type according to any one of Claims 1 to 6, **characterized in that** the axial width of the additional reinforcement (7) is at most equal to 0.4 times the nominal section width of the tyre.

8. **-** Tyre (1) for a heavy vehicle of the civil engineering type according to any one of Claims 1 to 7, **characterized in that** the additional reinforcement (7) comprises at least two additional layers (71, 72).

9. **-** Tyre (1) for a heavy vehicle of the civil engineering type according to any one of Claims 1 to 8, **characterized in that** the elastic metallic reinforcers of each additional layer (71, 72) make with the circumferential direction an angle of between 5° and 10°.

10. **-** Tyre (1) for a heavy vehicle of the civil engineering type according to any one of Claims 1 to 8, **characterized in that** the elastic metallic reinforcers of each additional layer (71, 72) make with the circumferential direction a zero angle.

11. **-** Tyre (1) for a heavy vehicle of the civil engineering type according to any one of Claims 1 to 10, **characterized in that** the elastic metallic reinforcers of each protective layer (51, 52) make with the circumferential direction an angle of between 15° and 30°.

12. **-** Tyre (1) for a heavy vehicle of the civil engineering type according to any one of Claims 1 to 11, **characterized in that** the inelastic metallic reinforcers of each working layer (61, 62) make with the circumferential direction an angle of between 15° and 40°.
